# EUROPÄISCHE PATENTSCHRIFT

(11) **EP 2 700 567 B1**
(45) Veröffentlichungstag und Bekanntmachung des Hinweises auf die Patenterteilung: **14.10.2015**
(21) Anmeldenummer: 13003847.4
(22) Anmeldetag: 01.08.2013
(51) Int. Cl.: B62D 15/02, G05D 1/02, B60W 30/00, B60W 30/06

(54) **Verfahren und System zum Betreiben eines Fahrzeugs unter Überwachung der Fortbewegung des Fahrzeugs mit Hilfe einer Kameraeinrichtung einer mobilen Bedieneinrichtung**
Method and system for operating a vehicle with monitoring of the movement of the vehicle using the camera equipment of a mobile operating device
Système et procédé pour faire fonctionner un véhicule en surveillant son déplacement en avant à l'aide d'un système de caméra d'un dispositif de commande mobile

(30) Priorität: 25.08.2012 DE 102012016868
(43) Veröffentlichungstag der Anmeldung: 26.02.2014
(73) Patentinhaber: AUDI AG, 85045 Ingolstadt (DE)
(72) Erfinder: Leinfelder, Rudolf, DE - 85072 Eichstätt (DE)
(74) Vertreter: Thielmann, Frank

(56) Entgegenhaltungen:
- EP-A1- 2 184 208
- EP-A2- 2 316 709
- JP-A- 2006 069 443

## Beschreibung

Die vorliegende Erfindung umfasst ein Verfahren gemäß dem Oberbegriff von Anspruch 1 sowie ein System zum Betreiben eines Fahrzeugs gemäß dem Oberbegriff von Anspruch 10.

In den vergangenen Jahren wurden viele Anstrengungen unternommen und sind technische Lösungen bekannt geworden, mit denen ein Fahrzeug, insbesondere ein Kraftfahrzeug, autonom gesteuert werden kann.

Bei einer autonomen Steuerung eines Fahrzeugs, das oftmals auch als "pilotiertes Fahren" bezeichnet wird, wird überwiegend mittels fahrzeugseitiger Sensorik und Aktorik (auch als Aktuatorik bezeichnet) ein Fortbewegen eines Fahrzeugs ohne unmittelbares Bedienen des Fahrzeugs durch einen Fahrers durchgeführt.

Eines der Beispiele für pilotiertes Fahren sind Park-Lenk-Assistenzsysteme, die ein automatisches Ein- bzw. Ausparken eines Fahrzeugs ermöglichen.

So beschreibt beispielsweise die EP 1 249 379 A2 ein Verfahren zum Verbringen eines Kraftfahrzeugs in eine Zielposition, wobei das Kraftfahrzeug in eine Startposition nahe der angestrebten Zielposition gebracht wird, nach einer ersten fahrerseitigen Aktivierung die Umgebung des Kraftfahrzeugs und zumindest zur Detektion der Zielposition fortlaufend abgetastet und die aktuelle Fahrzeugposition fortlaufend ermittelt wird, anhand der ermittelten Umgebungs- und Positionsinformationen Steuerinformationen für das Verbringen des Kraftfahrzeugs in die Zielposition ermittelt werden, nach einer zweiten fahrerseitigen Aktivierung von den Steuerinformationen abhängige Steuerbefehle an den Antriebsstrang und/oder die Bremsanlage und/oder die Lenkung des Kraftfahrzeugs abgegeben werden, wodurch das Kraftfahrzeug fahrerunabhängig in die Zielposition fährt.

Und aus der DE 10 2009 051 463 A1 ist ein Kraftfahrzeug mit einer zugeordneten externen Steuerungsvorrichtung und einem Park-Lenk-Assistenzsystem umfassend eine kraftfahrzeugseitige Steuerungseinrichtung bekannt, wobei die externe Steuerungsvorrichtung zur Kommunikation mit der kraftfahrzeugseitigen Steuerungseinrichtung ausgebildet ist und die kraftfahrzeugseitige Steuerungseinrichtung unter Berücksichtigung der im Rahmen der Kommunikation übertragenen Signale zur Ermittlung einer Ortsinformation über den Aufenthaltsort des Fahrers und/oder einen vom Fahrer vorgegebenen Zielort ausgebildet ist, wobei ein durch die kraftfahrzeugseitige Steuerungseinrichtung gesteuerter Ausparkvorgang unter Berücksichtigung der Ortsinformation durchführbar ist.

Bei derartigen autonomen bzw. pilotierten Fahrvorgängen eines (Kraft)Fahrzeugs ist es erforderlich, dass der Fahrer jederzeit die Möglichkeit hat, in den Vorgang einzugreifen, insbesondere ihn zu unterbrechen. So beschreibt beispielsweise die bereits erwähnte EP 1 249 379 A1, dass ein selbsttätiger Park- oder Rangiervorgang mittels einer Sendeeinrichtung gestartet und unterbrochen werden kann. Der selbsttätige Park- oder Rangiervorgang bleibt dabei nur dann aufrechterhalten, solange der Fahrer Kontakt mit dem Fahrzeug hält, zum Beispiel durch Drücken einer Park- oder Rangiertaste an der Sendeeinrichtung. Wird die Taste freigegeben, so wird der Park- oder Rangiervorgang sofort unterbrochen und das Fahrzeug wird selbsttätig gestoppt. Die Sendeeinrichtung kann zum Beispiel in den Fahrzeugschlüssel oder in ein Mobiltelefon integriert sein.

Weiter ist aus der DE 10 2009 041 587 A1 eine Fahrerassistenzeinrichtung für ein Kraftfahrzeug mit einer Steuereinrichtung bekannt, die dazu ausgelegt ist, Steuersignale an eine Antriebs- und/oder Lenkvorrichtung des Kraftfahrzeugs auszugeben, die ein Durchführen eines autonomen Parkvorgangs veranlassen, und Befehle von einer Fernbedienung zu empfangen und nach Empfangen eines vorbestimmten Unterbrechungsbefehls einen bereits begonnenen Parkvorgang des Kraftfahrzeugs zu unterbrechen, wobei zumindest eine mit der Steuereinrichtung gekoppelte Kamera zum Gewinnen von Bilddaten über einen Umgebungsbereich des Kraftfahrzeugs vorgesehen ist, wobei die Steuereinrichtung dazu ausgelegt ist, Signale an die Fernbedienung zu senden, die die durch die zumindest eine Kamera gewonnenen Bilddaten und/oder daraus berechnete Bilddaten umfassen. Der Fahrer wird durch diese Fahrerassistenzeinrichtung beim Überwachen eines autonomen Parkvorgangs des Kraftfahrzeugs dahingehend unterstützt, dass er an einer Anzeigeeinrichtung der tragbaren bzw. mobilen Fernbedienung Bilder über einen Umgebungsbereich des Kraftfahrzeugs angezeigt bekommt. Der Fahrer kann somit im Umgebungsbereich des Kraftfahrzeugs befindlichen Objekte sehen und den autonomen Parkvorgang gegebenenfalls dann unterbrechen, wenn eine Gefahrsituation entsteht.

Die aus der DE 10 2009 041 587 A1 bekannte Fahrerassistenzeinrichtung ist insoweit nachteilig, als ein Fahrer eine bei einer mobilen Fernbedienung in aller Regel vergleichsweise kleine Anzeigeeinrichtung beobachten und aufgrund der hierauf angezeigten Darstellungen entscheiden muss, ob eine Gefahrsituation gegeben ist oder nicht. Durch die vergleichsweise kleine Anzeigeeinrichtung können Einzelheiten des aufgenommenen Umgebungsbereichs aber oftmals nicht oder nur ungenau erkannt werden. Diese Situation wird bei hellem Umgebungslicht noch ungünstiger, da hierbei die dargestellten Bilder und Informationen oftmals nicht oder nur noch eingeschränkt erkennbar sind.

Der nächstliegende Stand der Technik ist in der DE 10 2009 041 587 A1 zu sehen. Es ist Aufgabe der vorliegenden Erfindung ein im Vergleich zum vorbekannten Stand der Technik verbessertes Verfahren und ein verbessertes System zur Bedienung eines Fahrzeugs zur Verfügung zu stellen. Diese Aufgaben werden gelöst durch das Verfahren gemäß Anspruch 1 und das System gemäß Anspruch 10. Vorteilhafte Weiterbildungen der Erfindung sind Gegenstand der Unteransprüche.

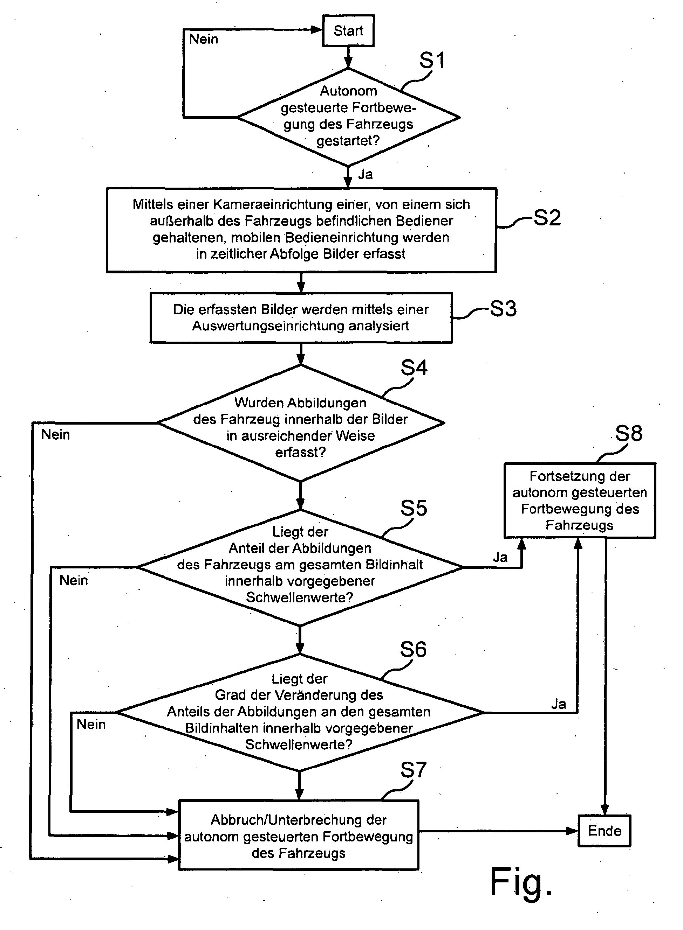

Erfindungsgemäß wird ein Verfahren zum Betreiben eines Fahrzeugs vorgeschlagen, wobei das Fahrzeug eine autonom gesteuerte Fortbewegung ausführt. Das erfindungsgemäße Verfahren ist **dadurch gekennzeichnet, dass** mittels einer Kameraeinrichtung einer, von einem sich außerhalb des Fahrzeugs befindlichen Bediener gehaltenen, mobilen Bedieneinrichtung in zeitlicher Abfolge Bilder erfasst werden, durch eine Auswertungseinrichtung eine Position des Fahrzeugs innerhalb der erfassten Bilder, eine Veränderung der Position des Fahrzeugs innerhalb der Bilder, ein Anteil der Abbildung des Fahrzeugs am gesamten Bildinhalt, und/oder eine Veränderung des Anteils der Abbildung des Fahrzeugs am gesamten Bildinhalt ermittelt wird/werden, und für den Fall, dass das Fahrzeug von den Bildern nicht oder nicht vollständig erfasst wurde, der Anteil der Abbildung des Fahrzeugs am gesamten Bildinhalt oberhalb oder unterhalb eines vorgebbaren Schwellenwerts liegt, die Veränderung der Position des Fahrzeugs innerhalb der Bilder oberhalb oder unterhalb eines vorgebbaren Schwellenwerts liegt und/oder das Ausmaß der Veränderung des Anteils der Abbildung des Fahrzeugs am gesamten Bildinhalt oberhalb oder unterhalb eines vorgebbaren Schwellenwerts liegt, die autonom gesteuerte Fortbewegung des Fahrzeugs unter- oder abgebrochen wird.

Während des autonomen bzw. pilotierten Fortbewegungsvorgangs des Fahrzeugs wird somit zum einen die jeweils aktuelle Entfernung und Bewegung des Fahrzeugs relativ zu dem Bediener erfasst bzw. analysiert, der die mobile Bedieneinrichtung hält und mit ihr in zeitlicher Abfolge Bilder des Fahrzeugs erfasst. In vorgebbaren Situationen, beispielsweise wenn festgestellt wird, dass sich der Bediener zu weit von dem Fahrzeug weg befindet bzw. bewegt (Anteil der Abbildung des Fahrzeugs am gesamten Bildinhalt ist zu klein oder sinkt unter einen vorgebbaren Schwellenwert), sich zu nah am Fahrzeug befindet oder der Abstand zwischen Fahrzeug und Bediener einen vorgebbaren Schwellenwert unterschreitet (Anteil der Abbildung des Fahrzeugs am gesamten Bildinhalt ist zu groß oder steigt über einen vorgebbaren Schwellenwert), der Bediener der Bewegung des Fahrzeugs nicht oder nicht in ausreichender Weise folgen kann oder er die mobile Bedieneinrichtung verkehrt hält (das Fahrzeug wird von den Bildern nicht oder nicht vollständig erfasst), wird der autonome bzw. pilotierte Fortbewegungsvorgang des (Kraft)Fahrzeugs automatisch unter- oder abgebrochen, ohne dass ein aktives Eingreifen des Bedieners erforderlich wäre.

Das erfindungsgemäße Verfahren weist im Vergleich zum Stand der Technik somit den Vorteil auf, dass ein Bediener (bei dem es sich oftmals um den Fahrer des Fahrzeug handeln wird), der sich während eines autonomen bzw. pilotierten Fortbewegungsvorgangs des Fahrzeugs außerhalb von diesem befindet, mit einer Kameraeinrichtung einer mobilen Bedieneinrichtung das Fahrzeug und dessen Fortbewegung erfassen muss. Wenn die vom Fahrzeug erfassten Bilder nicht bestimmten, vorgebbaren Kriterien entsprechen, wird dieser Fortbewegungsvorgang automatisch unter- oder abgebrochen.

Für eine noch genaueren Abgleich zwischen dem Abstand des Fahrzeugs von der mobilen Bedieneinrichtung und/oder der relativen Bewegung zwischen mobiler Bedieneinrichtung und dem Fahrzeug ist gemäß einer ersten vorteilhaften Weiterbildung der Erfindung vorgesehen, dass vom Fahrzeug Daten über eine aktuelle Position oder Daten bezüglich einer Anfangsposition, einer Geschwindigkeit und/oder eines Geschwindigkeitsverlaufs sowie einer Richtung und/oder eines Richtungsverlaufs an die Auswertungseinrichtung übertragen werden.

Gemäß einer zweiten vorteilhaften Weiterbildung der Erfindung wird für das Verfahren als mobile Bedieneinrichtung ein Smartphone verwendet. Praktisch alle modernen Mobiltelefone (die derzeit regelmäßig als "Smartphone" bezeichnet werden), verfügen über zumindest eine Kameraeinrichtung. Hiermit ist es möglich, jedenfalls in zeitlicher Abfolge Bilder zu erfassen, in denen das autonom gesteuerte Fahrzeug abgebildet ist.

Gemäß noch einer weiteren vorteilhaften Weiterbildung der Erfindung wird als die Auswertungseinrichtung eine digitale Recheneinrichtung in der mobilen Bedieneinrichtung und/oder in dem Fahrzeug verwendet. Beispielsweise verfügen moderne Smartphones bereits heute über leistungsfähige Prozessoren mit bis zu vier Kernen zur Abarbeitung einer großen Anzahl an Rechenoperationen pro Sekunde. In ähnlicher Weise finden leistungsfähige Prozessoren bzw. Recheneinrichtungen für diverse Rechenaufgaben Anwendung in (Kraft)Fahrzeugen. Diese zur Verfügung stehende Rechenleistung - die in den kommenden Jahren aller Voraussicht nach weiter steigen wird - kann in vorteilhafter Weise für das erfindungsgemäße Verfahren verwendet werden.

Gemäß noch einer weiteren vorteilhaften Weiterbildung der Erfindung ist vorgesehen, dass Daten zwischen Fahrzeug und mobiler Bedieneinrichtung mittels einer drahtlosen Funkverbindung unter Verwendung eines Funkstandards gemäß IEEE-802.11a, IEEE-802.11b, IEEE-802.11g, IEEE-802.11n, IEEE-802.15.1, IEEE-802.15.2, IEEE-802.15.3, IEEE-802.15.4, einer Abwandlung und/oder Weiterentwicklung hiervon oder einem Mobilfunk-Standard übertragen werden. Mittels dieser Funkstandards - die in vielen (Kraft)Fahrzeugen und mobilen Bedieneinrichtungen, wie beispielsweise Smartphones bereits implementiert sind - kann auf preiswerte und gleichzeitig zuverlässige Weise ein drahtloser Datenaustausch realisiert werden.

Weiter ist es von Vorteil, wenn zum Start der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt wird. Gleiches gilt, wenn zum Unter- oder Abbrechen der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt werden kann.

Das erfindungsgemäße Verfahren ist nicht auf bestimmte Art der autonom gesteuerten Fortbewegung eines Fahrzeugs beschränkt, kann insbesondere aber für einen autonomen Einparkvorgang, einen autonomen Ausparkvorgang und/oder eine autonome Weiterfahrt verwendet werden. Weiter ist es von Vorteil, wenn gemäß noch einer weiteren vorteilhaften Weiterbildung der Erfindung die in zeitlicher Abfolge von der Kameraeinrichtung der mobilen Bedieneinrichtung aufgenommenen Bilder in Echtzeit auf einer Anzeigeeinrichtung der mobilen Bedieneinrichtung dargestellt werden.

Die vorliegende Erfindung umfasst auch ein System zum Betreiben eines Fahrzeugs, das dadurch gekennzeichnet ist, dass es ein Fahrzeug und eine mobile Bedieneinrichtung umfasst, die zur Durchführung des erfindungsgemäßen Verfahrens oder eines seiner vorteilhaften Weiterbildungen eingerichtet sind.

Die vorliegende Erfindung wird anhand der beigefügten Zeichnung näher erläutert.

Die Figur zeigt ein schematisches Diagramm eines Beispiels für einen Ablauf des erfindungsgemäßen Verfahrens.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Bei dem in der Figur dargestellten Ablaufdiagramm gemäß einem bevorzugten Ausführungsbeispiel der vorliegenden Erfindung wird in einem ersten Schritt S1 überprüft, ob eine autonom gesteuerte Fortbewegung eines Fahrzeugs gestartet wurde. Dies kann beispielsweise durch das Auslesen des Zustands einer für eine autonom gesteuerte Fortbewegung eines Fahrzeugs vorgesehenen Steuereinrichtung oder durch das Erfassen eines entsprechenden Steuerbefehls erfolgen.

Ergibt diese Prüfung bzw. Abfrage, dass eine autonom gesteuerte Fortbewegung des Fahrzeugs gestartet ist, werden in einem Schritt S2 mittels einer Kameraeinrichtung einer, von einem sich außerhalb des Fahrzeugs befindlichen Bediener gehaltenen, mobilen Bedieneinrichtung in zeitlicher Abfolge Bilder erfasst.

Sie erfassten Bilder werden gemäß Schritt S3 mittels einer Auswertungseinrichtung analysiert. Hierbei kann in einem Schritt S4 überprüft bzw. analysiert werden, ob innerhalb der erfassten Bilder Abbildungen des Fahrzeugs in ausreichender Weise erfasst wurden. Was unter "in ausreichender Weise" zu verstehen ist, kann in jeder geeigneten Weise vorgegeben werden. So kann beispielsweise als ein Schwellenwert vorgesehen sein, dass im Wesentlichen eine Seite des Fahrzeugs in seiner Gesamtheit innerhalb der Bilder zu erkennen sein muss, oder dass das Fahrzeug mit einem vorgebbaren Wahrscheinlichkeitsgrad innerhalb der Bilder als das zu beobachtende Fahrzeug identifiziert werden kann (z.B. anhand von Farbe, Form). Auch können andere Kriterien herangezogen werden, wie beispielsweise Helligkeit und/oder Kontrast der Abbildungen innerhalb der Bilder.

Wenn die Prüfung bzw. die Analyse in Schritt S4 zu einem negativen Ergebnis führt, beispielsweise weil auf den erfassten Bilder das zu beobachtende Fahrzeug nicht erkennbar ist, da der Benutzer die mobile Bedieneinrichtung in einer Art und Weise hält, bei der das Fahrzeug vom Erfassungsbereich der Kameraeinrichtung nicht erfasst werden kann, wird in einem Schritt S7 die autonom gesteuerte Fortbewegung des Fahrzeugs abgebrochen oder unterbrochen. Sofern in der vorliegenden Anmeldung ein Begriff wie "abbrechen" verwendet wird, kann dies auch bedeuten, dass die autonom gesteuerte Fortbewegung des Fahrzeugs gar nicht erst beginnt, das "Abbrechen" also beispielsweise unmittelbar nach dem Startsignal für die autonom gesteuerte Fortbewegung erfolgt.

Führt die Prüfung bzw. Analyse in Schritt S4 zu einem positiven Ergebnis, werden innerhalb der erfassten Bilder also Abbildungen des Fahrzeugs in ausreichender Weise erfasst, so erfolgt in einem Schritt S5 die Prüfung bzw. Analyse, ob der Anteil der Abbildungen des Fahrzeugs am gesamten Bildinhalt innerhalb vorgegebener Schwellenwerte liegt.

Diese Prüfung bzw. Analyse dient dazu festzustellen, in welcher Entfernung sich die mobile Bedieneinrichtung vom Fahrzeug entfernt befindet. Es ist bekannt bzw. auslesbar, welchen Aufnahmewinkel die in einer Kameraeinrichtung verwendete Optik aufweist. Der Aufnahmewinkel ergibt sich beispielsweise aus der Brennweite der verwendeten Optik und die für die Erfassung der Bilder verwendete lichtempfindliche Aufnahmefläche (Chipgröße). Ebenso ist bekannt bzw. auslesbar, ob bzw. wenn ja welcher optische oder digitale Zoomfaktor verwendet wird.

Aufgrund dieser Aufnahmeparameter kann in Kombination mit der Analyse bzw. Ermittlung der Größe der Abbildung des Fahrzeugs oder des erfassten Teils des Fahrzeugs in den erfassten Bildern festgestellt bzw. abgeschätzt werden, wie weit sich die mobile Bedieneinrichtung vom zu beobachtenden Fahrzeug entfernt befindet.

Wird hierbei festgestellt, dass sich das Fahrzeug zu nahe bei dem Fahrzeug befindet, der Anteil der Abbildung des Fahrzeugs an dem gesamten Bildinhalt also mehr als ein vorgebbarer Schwellenwert beträgt, ist davon auszugehen, dass der Bediener keinen ausreichenden Überblick über die Gesamtsituation hat bzw. dass je nach Bewegungsrichtung des Fahrzeugs sogar eine Kollision zwischen Bediener und Fahrzeug befürchtet werden muss. Daher wird in diesem Fall im Schritt S7 die autonom gesteuerte Fortbewegung des Fahrzeugs ab- oder unterbrochen.

Wenn hingegen der Anteil der Abbildung des Fahrzeugs an dem gesamten Bildinhalt kleiner ist als ein vorgebbarer Schwellenwert, bedeutet dies, dass sich der Bediener so weit von dem Fahrzeug entfernt befindet, dass er nicht mehr in der Lage ist, die autonom gesteuerte Fortbewegung des Fahrzeugs in ausreichend genauer Art und Weise zu beobachten, also auch nicht in der Lage ist, das Entstehen oder Bestehen einer Gefahrensituation ausreichend genau zu erkennen. Daher wird auch in diesem Fall im Schritt S7 die autonom gesteuerte Fortbewegung des Fahrzeugs gestoppt.

Ergibt die Prüfung bzw. Analyse in Schritt S5, dass der Anteil der Abbildungen des Fahrzeugs am gesamten Bildinhalt der erfassten Bilder innerhalb der vorgegebenen Schwellenwerte liegt, so wird in einem Schritt S6 geprüft, ob der Grad der Veränderung des Anteils der Abbildungen an dem gesamten Bildinhalten innerhalb vorgebbarer Schwellenwerte liegt.

Beispielsweise sind bei einem Ein- oder Ausparkvorgang, der durch die Kameraeinrichtung der mobilen Bedieneinrichtung erfasst wird, bestimmte Schwellenwerte für eine maximale Geschwindigkeit vorgegeben. Daher werden sich die Abbildungen des Fahrzeugs innerhalb der erfassten Bilder in einer bestimmten, erwarteten Art und Weise verändern. Bei einer Bewegung in Richtung hin zur mobilen Bedieneinrichtung wird der Anteil der Abbildungen des Fahrzeugs an den erfassten Bildern größer werden, und entsprechend wird er bei einer Bewegung weg von der mobilen Bedieneinrichtung kleiner werden.

Wird nun beispielsweise im Schritt S6 festgestellt, dass der Grad der Veränderung außerhalb von vorgegebenen Schwellenwerten liegt, dass sich das Fahrzeug also zu langsam oder zu schnell bewegt, ist vom Vorliegen einer Störung auszugehen (beispielsweise wird das Fahrzeug von einem Hindernis abgebremst, oder es liegt eine Störung der Steuerungssystem für die autonome Fortbewegung vor). Daher wird auch in diesem Fall im Schritt S7 die autonom gesteuerte Fortbewegung des Fahrzeugs ab- oder unterbrochen.

Bei dem in der Figur gezeigten Ausführungsbeispiel erfolgen die Schritte S4, S5 sowie S6 nacheinander. Eine derartige Vorgehensweise ist jedoch für das erfindungsgemäße Verfahren nicht zwingend erforderlich. Beispielsweise können die genannten Schritte auch parallel oder quasi parallel (d.h. in kürzest möglichem zeitlichem Abstand hintereinander) durchgeführt werden. Sofern bei einem dieser Schritte ein Zustand erkannt wird, der entsprechend den vorgegebenen Kriterien und/oder Schwellenwerten einen Abbruch oder eine Unterbrechung der autonom gesteuerten Fortbewegung des Fahrzeugs erforderlich macht, wird dann innerhalb des erfindungsgemäßen Verfahrens zum Schritt S7 gesprungen und die autonom gesteuerte Fortbewegung des Fahrzeugs ab- oder unterbrochen.

Beispielsweise kann die Situation gegeben sein, dass anfänglich bei allen Schritten S4, S5 und S6 die Kriterien für eine Fortsetzung der autonom gesteuerten Fortbewegung des Fahrzeugs gegeben sind. Wenn nun der Bediener die Ausrichtung der mobilen Bedieneinrichtung in einer Art und Weise ändert, dass innerhalb der erfassten Bilder Abbildungen des Fahrzeugs nicht mehr oder nicht mehr in ausreichender Weise erfasst werden, wird gemäß Schritt S4 zum Schritt S7 gesprungen und die autonom gesteuerte Fortbewegung des Fahrzeugs ab- oder unterbrochen. Oder wenn sich der Bediener während der autonom gesteuerten Fortbewegung des Fahrzeugs dem Fahrzeug zu sehr nähert oder sich so weit von ihm entfernt, wird die autonom gesteuerte Fortbewegung des Fahrzeugs gemäß den Schritten S5 und/oder S6 in Verbindung mit Schritt S7 ab- oder unterbrochen.

Für einen noch genaueren Abgleich zwischen dem Abstand des Fahrzeugs von der mobilen Bedieneinrichtung und/oder der relativen Bewegung zwischen mobiler Bedieneinrichtung und dem Fahrzeug können vom Fahrzeug Daten über seine jeweils aktuelle Position oder Daten bezüglich einer Anfangsposition zu Beginn des Verfahrens (diese Daten können beispielsweise mittels GPS ermittelt werden) und einer daran anschließenden Erfassung der Geschwindigkeit und/oder eines Geschwindigkeitsverlaufs sowie der Richtung und/oder eines Richtungsverlaufs (Lenkwinkel, Lenkverhalten) des Fahrzeugs an die Auswertungseinrichtung übertragen bzw. zur Verfügung gestellt werden. Diese Daten können beispielsweise durch eine entsprechende fahrzeugseitige Einrichtung des Fahrzeugs zur Verfügung gestellt werden.

Bei dem erfindungsgemäßen Verfahren ist es regelmäßig erforderlich, dass Daten vom Fahrzeug zu der mobilen Bedieneinrichtung oder Daten von der mobilen Bedieneinrichtung zum Fahrzeug übertragen werden, Daten zwischen Fahrzeug und mobiler Bedieneinrichtung ausgetauscht werden, oder Daten vom Fahrzeug und/oder der mobilen Bedieneinrichtung zu einer Auswertungseinrichtung übertragen werden.

So können beispielsweise Steuerbefehle bezüglich einer Fortsetzung und/oder bezüglich eines Abbruchs oder einer Unterbrechung der autonom gesteuerten Fortbewegung des Fahrzeugs von der mobilen Bedieneinrichtung zu einer entsprechenden fahrzeugseitigen Steuereinrichtung übertragen werden. Oder Daten bezüglich der aktuellen Position des Fahrzeugs von dem Fahrzeug zu einer in der mobilen Bedieneinrichtung vorgesehenen Auswertungseinrichtung übertragen werden.

Hierbei ist es bevorzugt, dass die Daten mittels einer drahtlosen Funkverbindung übertragen werden. Als geeignete Beispiele seien hier erwähnt die Funkstandards gemäß IEEE-802.11a, IEEE-802.11b, IEEE-802.11g, IEEE-802.11 n (auch als Wireless Lan-, WLAN- oder Wi-Fi-Standards bezeichnet), IEEE-802.15.1, IEEE-802.15.2, IEEE-802.15.3, IEEE-802.15.4 (auch als Wireless Personal Area Network-, WPAN-, oder Bluetooth-Standards bezeichnet), Abwandlungen und/oder Weiterentwicklungen hiervon oder ein Mobilfunk-Standard. Insbesondere die Funkstandards gemäß der IEEE-802-Familie erscheinen derzeit als besonders geeignet für eine ausreichend rasche und sichere drahtlose Kommunikation über die beim erfindungsgemäßen Verfahren gegebenen, vergleichsweise kurzen Entfernungen.

Gemäß einer bevorzugten Ausführungsform des erfindungsgemäßen Verfahrens ist vorgesehen, dass als mobile Bedieneinrichtung ein Smartphone verwendet wird. Auf der einer Haupt-Anzeigeeinrichtung gegenüberliegenden Seite verfügen die meisten Smartphones über eine Kameraeinrichtung, die üblicherweise zur Aufnahme von Stand- und/oder Bewegtbildern (Fotos und/oder Videos) vorgesehen ist. Mittels dieser Kameraeinrichtung können in vorteilhafter Weise in zeitlicher Abfolge Bilder des Fahrzeugs aufgenommen werden.

Die mittels der Kameraeinrichtung aufgenommenen Bilder des Fahrzeugs können durch eine geeignete Auswertungssoftware oder Auswertungseinrichtung analysiert werden, wie es oben bereits beschrieben wurde.

Wenn der Bediener mit der Kameraeinrichtung des Smartphone das Fahrzeugs erfassen möchte, ergibt sich als weiterer Vorteil, dass er das Smartphone regelmäßig so halten wird, wie es auch beim Fotografieren und/oder Filmen der Fall ist. Er wird die mobile Bedieneinrichtung (das Smartphone) also vor sich in etwa in Augenhöhe halten. Dies insbesondere dann, wenn - wie dies gemäß einer vorteilhaften Weiterbildung der vorliegenden Erfindung vorgesehen ist - die in zeitlicher Abfolge aufgenommenen Abbildungen des Fahrzeugs in Echtzeit auf der (Haupt)Anzeigeeinrichtung der mobilen Bedieneinrichtung dargestellt werden. Bei einer derartigen Ausführungsform des erfindungsgemäßen Verfahrens ist die Erfassung der aktuellen Position des Fahrzeugs somit einer Situation vergleichbar, wie sie beim Aufzeichnen eines Videos mit Hilfe des Smartphones gegeben ist. Hierdurch wird auch die Blickrichtung und/oder Kopforientierung des Bedieners regelmäßig in Richtung des sich autonom gesteuerten Fahrzeugs weisen, so dass der Bediener auch in Richtung des Fahrzeugs sieht und somit er auch selbst eine Gefahrensituation leicht erkennen kann und gegebenenfalls - wie dies gemäß einer weiteren vorteilhaften Weiterbildung der Erfindung vorgesehen ist - zum Unter- oder Abbrechen der autonom gesteuerten Fortbewegung des Fahrzeugs ein Signal per Funk mittels eines Handsenders und oder der mobilen Bedieneinrichtung (Smartphone) an das Fahrzeug senden kann.

Sofern die in zeitlicher Abfolge aufgenommenen Abbildungen des Fahrzeugs in Echtzeit auf der (Haupt)Anzeigeeinrichtung der mobilen Bedieneinrichtung dargestellt werden, kann es sich bei den Abbildungen um die erfassten Bilder an sich handeln, aber es ist auch möglich, dass die Abbildungen modifiziert sind, beispielsweise aufgrund der durch die Auswertungseinrichtung vorgenommene Analyse bzw. Auswertung optisch für ein menschliches Auge besser erkennbar dargestellt werden, eine Stilisierung enthalten, eine Begrenzung auf die Abbildung des Fahrzeugs, und/oder weitere Informationen (z.B. eine Markierung möglicher Gefahrenpunkte) aufweisen.

In Bezug auf die für das Durchführen des erfindungsgemäßen Verfahrens verwendbaren Auswertungseinrichtung(en) bestehen keine besonderen Beschränkungen. Beispielsweise können die von der Kameraeinrichtung erfassten Bilder in einer Auswertungseinrichtung der mobilen Bedieneinrichtung analysiert werden. Die in/von einer Einrichtung (Fahrzeug, mobilen Bedieneinrichtung) erfassten Daten können beispielsweise auch per Funk zu einer Auswertungseinrichtung der anderen Einrichtung (mobile Bedieneinrichtung, Fahrzeug) übertragen und dort ausgewertet werden. Als Auswertungseinrichtung(en) können beispielsweise eine digitale Recheneinrichtung in der mobilen Bedieneinrichtung und/oder in dem Fahrzeug verwendet werden, auf denen ein jeweils geeigneter Computerprogrammcode ablauffähig installiert ist. Auch sind selbstverständlich reine Hardware-Lösungen als Auswertungseinrichtung denkbar.

Sofern in der vorliegenden Anmeldung von "zeitlicher Abfolge" gesprochen wird, sind hiervon alle geeigneten Zeitabstände umfasst. So können beispielsweise die Aufnahmen des Fahrzeugs in einem zeitlichen Abstand von 1/30 s, 1/25 s, 1/20 s, 1/15 s, 1/10 s, 1/5 s, oder 1 s erfasst werden. Erfindungsgemäß ist kein bestimmter zeitlicher Abstand für die jeweilige Erfassung notwendig, sondern es kann jeder für die gerade gegebene Situation geeignete zeitliche Abstand gewählt werden.

Wie oben bereits erwähnt wurde, ist das erfindungsgemäße Verfahren nicht auf eine bestimmte Art und Weise einer autonom gesteuerten Fortbewegung eines Fahrzeugs beschränkt. In derzeit bevorzugter Weise kann das erfindungsgemäße Verfahren jedoch für einen autonomen Einparkvorgang, einen autonomen Ausparkvorgang und/oder eine autonome Weiterfahrt verwendet werden. So kann das erfindungsgemäße Verfahren beispielsweise in vorteilhafter Weise für eine autonom gesteuerte Weiterfahrt im Bereich der Land- und Forstwirtschaft und im Bereich von Zustelldiensten (Post- und Paketdienste) angewandt werden.

In der Figur nicht dargestellt, von der vorliegenden Erfindung aber selbstverständlich umfasst sind weitere Schritte, die für eine Durchführung des erfindungsgemäßen Verfahrens zusätzlich durchgeführt werden können. So kann beispielsweise nach einem Abbruch/einer Unterbrechung der autonom gesteuerten Fortbewegung des Fahrzeugs im Schritt S7 das Verfahren nicht nur beendet werden, sondern auch - gegebenenfalls nach einer vorgebbaren Zeitdauer und/oder einer erneuten Bedienhandlung durch den Benutzer - erneut zum Startpunkt oder gegebenenfalls (falls die autonom gesteuerte Fortbewegung nur unterbrochen wurde) zu einem nachfolgenden Schritt, wie beispielsweise zu Schritt S3 oder Schritt S2 zurückgekehrt werden. Und die Fortsetzung der autonom gesteuerten Fortbewegung des Fahrzeugs im Schritt S7 wird regelmäßig nur so lange durchgeführt, bis beispielsweise durch eine fahrzeugseitige Steuereinrichtung deren erfolgreiche Abarbeitung bzw. Beendigung festgestellt wird.

Weiter kann bei dem erfindungsgemäßen Verfahren vorgesehen sein, dass Informationen in Bezug auf das zu beobachtende Fahrzeug in der mobilen Bedieneinrichtung hinterlegt, Informationen in Bezug auf die mobile Bedieneinrichtung in dem zu beobachtenden Fahrzeug hinterlegt und/oder dass eine geeignete Kommunikation zwischen mobiler (tragbarer) Bedieneinrichtung und Fahrzeug stattfindet, so dass sichergestellt werden kann, dass das erfindungsgemäße Verfahren zwischen dem "richtigen" Fahrzeug und der "richtigen" mobilen Bedieneinrichtung stattfindet.

Ebenso kann vorgesehen sein, dass durch eine fahrzeugseitige Steuereinrichtung die autonom gesteuerte Fortbewegung des Fahrzeugs jederzeit aboder unterbrochen werden kann, sofern durch diese beispielsweise ein Hindernis oder eine Fehlfunktion der fahrzeugseitigen Sensorik und/oder Aktorik festgestellt wird.

Weiter können bei dem erfindungsgemäßen Verfahren weitere Einrichtungen in der mobilen Bedieneinrichtung, insbesondere wenn diese in Form eines Smartphone verwendet wird, verwendet werden. So verfügen beispielsweise viele moderne Smartphones über einen Lage- und einen Beschleunigungssensor. Hiermit ist es beispielsweise möglich, bei der Auswertung der erfassten Bilder Bewegungen der mobilen Bedieneinrichtung zu erkennen und in Bezug auf die Schritte S4, S5 und/oder S6 zu berücksichtigen.

Weiter können bei dem erfindungsgemäßen Verfahren Toleranzen bzw. Zeitgrenzen vorgesehen sein, innerhalb derer eine autonom gesteuerte Fortbewegung des Fahrzeugs fortgesetzt wird, obwohl gemäß einem der Schritte S4, S5 oder S6 eigentlich ein Abbruch oder eine Unterbrechung der autonom gesteuerten Fortbewegung des Fahrzeugs veranlasst wäre. Hierdurch kann beispielsweise erreicht werden, dass ein kurzzeitiges Abweichen der Erfassungsrichtung der Kameraeinrichtung von der aktuellen Position des Fahrzeugs nicht gleich zu einem Abbruch oder eine Unterbrechung der autonom gesteuerten Fortbewegung des Fahrzeugs führt. Die Toleranzen bzw. Zeitgrenzen können dabei je nachgegebene Situation verschieden groß gewählt werden.

Die vorliegende Erfindung umfasst auch ein System zum Betreiben eines Fahrzeugs, das dadurch gekennzeichnet ist, dass es ein Fahrzeug und eine mobile Bedieneinrichtung umfasst, die zur Durchführung eines Verfahrens gemäß einer der Ansprüche 1 bis 9 eingerichtet sind.

Für Fachleute ist aufgrund der obigen Beschreibung des erfindungsgemäßen Verfahrens ohne weiteres ersichtlich, welche fahrzeugseitige Einrichtungen (Steuereinrichtung(en), Sensorik und Aktorik) für eine autonom gesteuerte Fortbewegung erforderlich ist. Weiter ist Fachleuten bekannt, mittels welcher fahrzeugseitigen Kommunikationseinrichtungen beispielsweise eine Kommunikation mit der mobilen Bedieneinrichtung sichergestellt werden kann (beispielsweise zum Austausch von Daten, zum Starten/Stoppen/Abbrechen/Unterbrechen der autonom gesteuerten Fortbewegung).

Ähnliches gilt in Bezug auf die Merkmale der mobilen Bedieneinrichtung (Kameraeinrichtung, gegebenenfalls Anzeigeeinrichtung, Kommunikationsmöglichkeit mit dem Fahrzeug, etc.).

Auch in Bezug auf die Auswertungseinrichtung ist dem Fachmann bekannt, welche Anforderungen geeignet bzw. erforderlich sind. Ähnliches gilt für das/die auf der Auswertungseinrichtung ablaufende(n) Computerprogramm(e).

Sofern und soweit bei der vorliegenden Erfindung ein Auswählen, Erkennen und Verfolgen (Tracking) von einem oder mehreren Objekten in den erfassten Bildern erforderlich ist oder durchgeführt wird, können alle geeigneten derzeit verfügbaren und zukünftig zur Verfügung stehenden Lösungen (Verfahren/Vorrichtungen) verwendet werden.

Ein typisches Beispiel für die Durchführung des erfindungsgemäßen Verfahrens könnte wie folgt ablaufen:
Ein Bediener (Fahrer) ist auf der Suche nach einer Parklücke, hat eine solche entdeckt und die Größe und Geeignetheit der Parklücke ist von fahrzeugseitiger Sensorik vermessen und als zumindest ausreichend qualifiziert worden. Der Bediener (Fahrer) stoppt das Fahrzeug in der Nähe der Parklücke und verlässt das Fahrzeug.

Damit der autonom gesteuerte Einparkvorgang gestartet bzw. durchgeführt wird, sendet der Bediener per Funk mittels eines Handsenders (der sich beispielsweise im Fahrzeugschlüssel befinden kann) und/oder der mobilen Bedieneinrichtung ein Signal zum Start des autonom gesteuerten Einparkvorgangs an das Fahrzeug. Ein solches Signal kann beispielsweise mittels eines Drucks auf eine Taste der mobilen Bedieneinrichtung, mittels eines Drucks auf ein auf einer Anzeigeeinrichtung der mobilen Bedieneinrichtung dargestellten Icons oder mittels eines Sprachbefehls ausgelöst werden.

Gleichzeitig oder kurz danach beginnt die Kameraeinrichtung der mobilen Bedieneinrichtung (Smartphone) damit, Bilder in zeitlicher Abfolge aufzunehmen. Diese Bilder werden von einer beispielsweise in der mobilen Bedieneinrichtung vorhandenen Auswertungseinrichtung analysiert. Kann auf den Bildern das Fahrzeug (in ausreichender Qualität) erkannt werden, und sind die weiteren Kriterien für den Start bzw. die Fortführung des autonom gesteuerten Einparkvorgangs erfüllt, so wird von der mobilen Bedieneinrichtung ein entsprechendes Signal per Funk zu einer entsprechenden fahrzeugseitigen Einrichtung gesandt.

Das Fahrzeug beginnt daraufhin mit dem autonom gesteuerten Einparkvorgang. Während der Dauer des Einparkvorgangs werden von der mobilen Bedieneinrichtung weiterhin von der Kameraeinrichtung aufgenommene Bilder analysiert. Sofern die Kriterien für die Fortführung des autonom gesteuerten Einparkvorgangs erfüllt sind, fährt das Fahrzeug mit dem autonomen Einparkvorgang fort. Sind die Kriterien für die Fortführung des autonomen Einparkvorgangs nicht mehr erfüllt, wird von der mobilen Bedieneinrichtung ein Signal zum ab- oder unterbrechen des autonom gesteuerten Einparkvorgangs an das Fahrzeug gesandt, woraufhin das Fahrzeug den Einparkvorgang ab- oder unterbricht, insbesondere also so rasch wie möglich seine Fortbewegung stoppt.

Sind die Kriterien für die Fortführung des autonomen Einparkvorgangs wieder erfüllt, hält der Bediener beispielsweise die mobile Bedieneinrichtung wieder in geeigneter Weise, kann entweder automatisch von der mobilen Bedieneinrichtung ein Signal zum Fortsetzen des Einparkvorgangs gesandt werden oder es kann ein solches Signal durch eine Bedienhandlung des Bedieners ausgelöst werden.

Während der Durchführung des autonom gesteuerten Einparkvorgangs hat der Bediener auch die Möglichkeit, sofern er es wünscht, zum Unter- oder Abbrechen der autonom gesteuerten Fortbewegung des Fahrzeugs ein Signal per Funk mittels eines Handsenders und/oder der mobilen Bedieneinrichtung an das Fahrzeug zu senden.

Hat das Fahrzeug seine autonom angesteuerte Endposition erreicht, kann beispielsweise durch die Übertragung eines entsprechenden Signals vom Fahrzeug zu der mobilen Bedieneinrichtung das erfindungsgemäße Verfahren beendet werden. Das Ende des erfindungsgemäßen Verfahrens kann dem Bediener durch eine entsprechende Anzeige auf der Anzeigeeinrichtung der mobilen Bedieneinrichtung, durch einen entsprechenden Signalton oder durch eine entsprechende Sprachausgabe signalisiert werden.

## Patentansprüche

1. Verfahren zum Betreiben eines Fahrzeugs, wobei das Fahrzeug eine autonom gesteuerte Fortbewegung ausführt,
**dadurch gekennzeichnet, dass**
mittels einer Kameraeinrichtung einer, von einem sich außerhalb des Fahrzeugs befindlichen Bediener gehaltenen, mobilen Bedieneinrichtung in zeitlicher Abfolge Bilder erfasst werden (S2),
durch eine Auswertungseinrichtung eine Position des Fahrzeugs innerhalb der erfassten Bilder, eine Veränderung der Position des Fahrzeugs innerhalb der Bilder, ein Anteil der Abbildung des Fahrzeugs am gesamten Bildinhalt, und/oder eine Veränderung des Anteils der Abbildung des Fahrzeugs am gesamten Bildinhalt ermittelt wird/werden (S3), und
für den Fall, dass das Fahrzeug von den Bildern nicht oder nicht vollständig erfasst wurde (S4), der Anteil der Abbildung des Fahrzeugs am gesamten Bildinhalt oberhalb oder unterhalb eines vorgebbaren Schwellenwerts liegt (S5), die Veränderung der Position des Fahrzeugs innerhalb der Bilder oberhalb oder unterhalb eines vorgebbaren Schwellenwerts liegt und/oder das Ausmaß der Veränderung des Anteils der Abbildung des Fahrzeugs am gesamten Bildinhalt oberhalb oder unterhalb eines vorgebbaren Schwellenwerts liegt (S6), die autonom gesteuerte Fortbewegung des Fahrzeugs unter- oder abgebrochen wird (S7).

2. Verfahren nach Anspruch 1,
**dadurch gekennzeichnet, dass**
vom Fahrzeug Daten über eine aktuelle Position oder Daten bezüglich einer Anfangsposition, einer Geschwindigkeit und/oder eines Geschwindigkeitsverlaufs sowie einer Richtung und/oder eines Richtungsverlaufs an die Auswertungseinrichtung übertragen werden.

3. Verfahren nach Anspruch 1 oder 2,
**dadurch gekennzeichnet, dass**
als mobile Bedieneinrichtung ein Smartphone verwendet wird.

4. Verfahren nach einem der vorhergehenden Ansprüche,
**dadurch gekennzeichnet, dass**
als Auswertungseinrichtung eine digitale Recheneinrichtung in der mobilen Bedieneinrichtung oder in dem Fahrzeug verwendet wird.

5. Verfahren nach einem der vorhergehenden Ansprüche,
**dadurch gekennzeichnet, dass**
Daten zwischen Fahrzeug und mobiler Bedieneinrichtung mittels einer drahtlosen Funkverbindung unter Verwendung eines Funkstandards gemäß IEEE-802.11a, IEEE-802.11b, IEEE-802.11g, IEEE-802.11n, IEEE-802.15.1, IEEE-802.15.2, IEEE-802.15.3, IEEE-802.15.4, einer Abwandlung und/oder Weiterentwicklung hiervon oder einem Mobilfunk-Standard übertragen werden.

6. Verfahren nach einem der vorhergehenden Ansprüche,
**dadurch gekennzeichnet, dass**
zum Start der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt wird.

7. Verfahren nach einem der vorhergehenden Ansprüche,
**dadurch gekennzeichnet, dass**
zum Unter- oder Abbrechen der autonom gesteuerten Fortbewegung des Fahrzeugs ein Signal per Funk durch den sich außerhalb des Fahrzeugs befindlichen Bediener mittels eines Handsenders und/oder der mobilen Bedieneinrichtung an das Fahrzeug gesandt werden kann.

8. Verfahren nach einem der vorhergehenden Ansprüche,
**dadurch gekennzeichnet, dass**
die autonom gesteuerte Fortbewegung des Fahrzeugs einen autonomen Einparkvorgang, einen autonomen Ausparkvorgang und/oder eine autonome Weiterfahrt umfasst.

9. Verfahren nach einem der Ansprüche 2 bis 8,
**dadurch gekennzeichnet, dass**
die in zeitlicher Abfolge von der Kameraeinrichtung der mobilen Bedieneinrichtung aufgenommenen Bilder in Echtzeit auf einer Anzeigeeinrichtung der mobilen Bedieneinrichtung dargestellt werden.

10. System zum Betreiben eines Fahrzeugs,
**dadurch gekennzeichnet, dass**
es ein Fahrzeug und eine mobile Bedieneinrichtung umfasst, die zur Durchführung eines Verfahrens gemäß einer der Ansprüche 1 bis 9 eingerichtet sind.

## Claims

1. Method for operating a vehicle, in which the vehicle performs an autonomously controlled movement,
**characterised in that**
images are captured (S2) in chronological order by means of a camera device of a mobile control device held by an operator outside the vehicle,
**in that** a position of the vehicle in the captured images, a change of the position of the vehicle in the images, a proportion of a total image content made up by the representation of the vehicle, and/or a change in the proportion of the total image content made up by the representation of the vehicle is/are determined (S3) by an evaluation device; and
**in that**, in the event that the vehicle is not, or not completely, captured by the images (S4), the proportion of the total image content made up by the representation of the vehicle lies above or below a predeterminable threshold value (S5), the change of the position of the vehicle in the images lies above or below a predeterminable threshold value, and/or the extent of the change of the proportion of the total image content made up by the representation of the vehicle lies above or below a predeterminable threshold value (S6), the autonomously controlled movement of the vehicle is interrupted or terminated (S7).

2. Method according to claim 1, **characterised in that** data relating to a current position, or data relating to a starting position, a speed, and/or a speed curve, and to a direction and/or a directional course are transmitted from the vehicle to the analysis device.

3. Method according to either claim 1 or claim 2, **characterised in that** a smartphone is used as the mobile control device.

4. Method according to any of the preceding claims, **characterised in that** a digital calculation device in the mobile control device or in the vehicle is used as the evaluation device.

5. Method according to any of the preceding claims, **characterised in that** data are transmitted between the vehicle and the mobile control device by means of wireless radio communication using a radio standard according to IEEE-802.11a, IEEE-802.11b, IEEE-802.11g, IEEE-802.11n, IEEE-802.15.1, IEEE-802.15.2, IEEE-802.15.3, IEEE-802.15.4, a modification thereto and/or development thereof, or by using a mobile radio standard.

6. Method according to any of the preceding claims, **characterised in that**, for starting the autonomously controlled movement of the vehicle, a signal is transmitted by radio to the vehicle by the operator located outside the vehicle by means of a handheld transmitter and/or the mobile control device.

7. Method according to any of the preceding claims, **characterised in that**, for interrupting or terminating the autonomously controlled movement of the vehicle, a signal can be transmitted by radio to the vehicle by the operator located outside the vehicle by means of a handheld transmitter and/or the mobile control device.

8. Method according to any of the preceding claims, **characterised in that** the autonomously controlled movement includes an autonomous parking procedure, an autonomous manoeuvre out of a parking space, and/or an autonomous continuation of driving.

9. Method according to any of claims 2 to 8, **characterised in that** the images that have been captured in chronological order by the camera device of the mobile control device are displayed in real-time on a display device of the mobile control device.

10. System for operating a vehicle, **characterised in that** it comprises a vehicle and a mobile control device which are configured for carrying out a method according to any of claims 1 to 9.

## Revendications

1. Procédé de fonctionnement d'un véhicule, dans lequel le véhicule effectue un mouvement de marche commandé de manière autonome,
**caractérisé en ce que** :
à l'aide d'un système de caméra d'un dispositif de commande de mobile tenu par un opérateur se trouvant en dehors du véhicule, des images sont saisies en ordre chronologique (S2),
on détermine par un dispositif d'évaluation une position du véhicule à l'intérieur des images saisies, une modification de la position du véhicule à l'intérieur des images, une fraction de la représentation du véhicule sur la totalité du contenu image et/ou une modification de la fraction de la représentation du véhicule sur la totalité du contenu image (S3), et
dans le cas où le véhicule n'a pas été saisi ou pas complètement par les images (S4), que la fraction de la représentation du véhicule sur la totalité du contenu image se situe au-dessus ou en dessous d'une valeur de seuil prédéterminable (S5), que la modification de la position du véhicule à l'intérieur des images se trouve au-dessus ou au-dessous d'une valeur de seuil prédéterminable et/ou que le degré de modification de la fraction de la représentation du véhicule sur la totalité du contenu image se situe au-dessus ou en dessous d'une valeur de seuil prédéterminable (S6), le mouvement de marche du véhicule commandé de manière autonome est interrompu ou suspendu (S7).

2. Procédé selon la revendication 1,
**caractérisé en ce que** :
des données concernant une position courante ou des données concernant une position de départ, une vitesse et/ou un profil de vitesse ainsi qu'une direction et/ou un profil de direction sont transférées par le véhicule au dispositif d'évaluation.

3. Procédé selon la revendication 1 ou la revendication 2,
**caractérisé en ce que** :
on utilise un smartphone comme dispositif de commande mobile.

4. Procédé selon l'une quelconque des revendications précédentes,
**caractérisé en ce que** :
l'on utilise comme dispositif d'évaluation un dispositif de calcul numérique dans le dispositif de commande mobile et/ou dans le véhicule.

5. Procédé selon l'une quelconque des revendications précédentes,
**caractérisé en ce que** :
des données sont transférées entre le véhicule et le dispositif de commande mobile au moyen d'une liaison radio sans fil en mettant en oeuvre un standard radio selon les normes IEEE-802.11a, IEEE-802.11b, IEEE-802.11g, IEEE-802.11n, IEEE-802.15.1, IEEE-802.15.2, IEEE-802.15.3, IEEE-802.15.4, d'une modification et/ou d'un développement de celui-ci ou d'un standard de téléphonie mobile.

6. Procédé selon l'une quelconque des revendications précédentes,
**caractérisé en ce que** :
pour démarrer le mouvement de marche du véhicule commandé de manière autonome, un signal est envoyé par radio au véhicule par l'opérateur se trouvant en dehors du véhicule au moyen d'un émetteur manuel et/ou du dispositif de commande mobile.

7. Procédé selon l'une quelconque des revendications précédentes,
**caractérisé en ce que** :
pour interrompre ou suspendre le mouvement de marche du véhicule commandé de manière autonome, un signal peut être envoyé par radio au véhicule par l'opérateur se trouvant en dehors du véhicule au moyen d'un émetteur manuel et/ou du dispositif de commande mobile.

8. Procédé selon l'une quelconque des revendications précédentes,
**caractérisé en ce que** :
le mouvement de marche du véhicule commandé de manière autonome comprend une opération de stationnement autonome, une opération de sortie de stationnement autonome et/ou une poursuite de marche autonome.

9. Procédé selon l'une quelconque des revendications 2 à 8,
**caractérisé en ce que** :
les images prises en ordre chronologique par le second système de caméra du dispositif de commande mobile sont présentées en temps réel sur un dispositif d'affichage du dispositif de commande mobile.

10. Système de fonctionnement d'un véhicule,
**caractérisé en ce que** :
il comprend un véhicule et un dispositif de commande mobile qui sont aménagés pour réaliser un procédé selon l'une quelconque des revendications 1 à 9.
